# EUROPÄISCHE PATENTSCHRIFT

(11) **EP 1 720 746 B1**
(45) Veröffentlichungstag und Bekanntmachung des Hinweises auf die Patenterteilung: **03.09.2008**
(21) Anmeldenummer: 05707880.0
(22) Anmeldetag: 28.01.2005
(51) Int. Cl.: B60S 1/04

(54) **SCHEIBENWISCHVORRICHTUNG, INSBESONDERE FÜR EIN KRAFTFAHRZEUG**
WINDSHIELD WIPING DEVICE, ESPECIALLY FOR A MOTOR VEHICLE
DISPOSITIF ESSUIE-GLACE, EN PARTICULIER POUR UN VEHICULE AUTOMOBILE

(30) Priorität: 26.02.2004 DE 102004009279
(43) Veröffentlichungstag der Anmeldung: 15.11.2006
(73) Patentinhaber: ROBERT BOSCH GMBH, 70442 Stuttgart (DE)
(72) Erfinder: KRAUS, Achim, 77815 Buehl (DE); RAPP, Juergen, 77886 Lauf (DE); VOLZ, Heiko, 77855 Achern (DE)
(86) Internationale Anmeldenummer: PCT/EP2005/050365
(87) Internationale Veröffentlichungsnummer: WO 2005/082689

(56) Entgegenhaltungen:
- EP-A- 0 739 792
- EP-A- 1 219 513
- DE-A1- 19 829 320
- PATENT ABSTRACTS OF JAPAN Bd. 2002, Nr. 02, 2. April 2002 (2002-04-02) -& JP 2001 301578 A (TOYOTA MOTOR CORP), 31. Oktober 2001 (2001-10-31)

## Beschreibung

### Stand der Technik

Die Erfindung betrifft eine Scheibenwischvorrichtung, insbesondere für ein Kraftfahrzeug, nach Gattung des unabhängigen Anspruchs.

Es sind schon zahlreiche Scheibenwischvorrichtungen bekannt, die einen plattenförmigen Träger aufweisen, an dem ein Elektromotor als Antriebseinheit und ein Wischerlager zum Lagern der Wischerwelle angeordnet ist. Die Wischerwelle trägt üblicherweise den Wischerarm, an dessen freien Ende das Wischblatt befestigt ist, welches im Betrieb pendelnd über die Scheibe bewegt wird. Zur Befestigung an der Karosserie des Kraftfahrzeugs weist der plattenförmige Träger Abschnitte mit Löchern als Halteelemente auf, mit Hilfe derer die Scheibenwischvorrichtung an der Karosserie des Kraftfahrzeugs angeschraubt werden kann.

Am Kraftfahrzeug ragen die Wischerwellen aus der Karosserie heraus, so dass beim Aufprall eines Fußgängers auf die Karosserie des Kraftfahrzeugs sich dieser an den Wischerarmen, Wischblättern oder an der Wischerwelle selbst, leicht verletzen kann.

Es ist daher wünschenswert, dass beim Aufprall eines Fußgängers auf die aus der Karosserie herausragenden Wischerwellen oder auf die Karosserie im Bereich der Scheibenwischvorrichtung selbst, die Scheibenwischvorrichtung zurückzuweichen vermag, so dass die Verletzungsgefahr für den aufprallenden Fußgänger reduziert wird.

Aus der EP-A-1 219 513 ist darüber hinaus eine Scheibenwischvorrichtung mit den Merkmalen des Oberbegriffs des Anspruchs 1 bekannt.

### Vorteile der Erfindung

Die erfindungsgemäße Scheibenwischvorrichtung mit den Merkmalen des Hauptanspruchs hat den Vorteil, dass sie beim Aufprall eines Fußgängers auf die Karosserie des Kraftfahrzeugs im Bereich der Scheibenwischvorrichtung, zurückzuweichen vermag, ohne dass kostenintensive, aktive Bauelemente benötigt werden.

Durch die in den Unteransprüchen aufgeführten Maßnahmen ergeben sich vorteilhafte Weiterbildungen und Verbesserungen der im Hauptanspruch angegebenen Merkmale.

Besonders vorteilhaft ist es, wenn die Sollbruchstelle im Bereich des Halteelementes und/oder im Bereich des Wischerlagers angeordnet ist, da in diesem Bereich die größte mechanische Spannung beim Aufprall eines Fußgängers bzw. beim Verbiegen des Trägers auftritt.

Besonders einfach und kostengünstig ist die Sollbruchstelle als Bohrung, Langloch oder Durchbruch ausgebildet.

Weiterhin ist es als vorteilhaft anzusehen, wenn die Antriebseinheit innerhalb der Umrandung aufgenommen wird, da auf diese Weise eine sehr kompakte Ausbildung der Scheibenwischvorrichtung erreicht wird.

Insbesondere wenn größere Scheibenwischvorrichtungen realisiert werden sollen, ist es vorteilhaft, wenn der Träger ein Befestigungselement aufweist, das der Befestigung eines Trägerrohrs dient. An diesem Trägerrohr kann beispielsweise ein weiteres Wischerlager vorgesehen sein, welches eine weitere Wischerwelle trägt.

In einer vorteilhaften und besonders eleganten Ausbildung weist der Träger spannungssteuernde Elemente auf, die derart angeordnet sind, dass die mechanischen Spannungen im Träger im Falle eines Aufpralls im Bereich der Sollbruchstellen so erhöht werden, dass der Träger an den Sollbruchstellen bricht und somit ein Zurückweichen der Scheibenwischvorrichtung ermöglicht.

Besonders vorteilhaft ist es hierbei weiterhin, dass eine Sollbruchstelle etwa zentral im plattenförmigen Träger angeordnet ist.

### Zeichnung

Ein Ausführungsbeispiel der Erfindung ist in der Zeichnung dargestellt und in der nachfolgenden Beschreibung näher erläutert.

Es zeigen
- Figur 1: eine erfindungsgemäße Scheibenwischvorrichtung in einer perspektivischen Darstellung und
- Figur 2: eine erfindungsgemäße Scheibenwischvorrichtung in Einbauposition in einem Kraftfahrzeug in schematischer Darstellung.

### Beschreibung des Ausführungsbeispiels

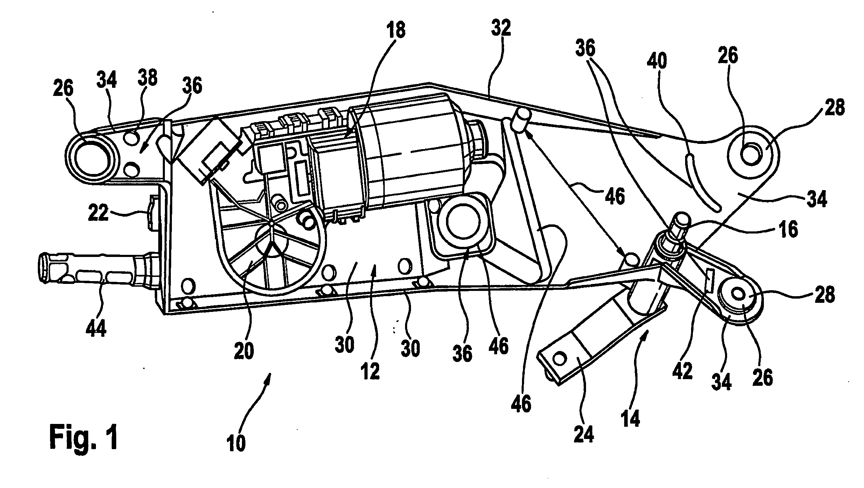

In Figur 1 ist eine erfindungsgemäße Scheibenwischvorrichtung 10 in einer perspektivischen Darstellung gezeigt. Diese umfasst im Wesentlichen einen plattenförmigen Träger 12, an dem ein Wischerlager 14 befestigt ist. Natürlich kann das Wischerlager 14 auch einstückig mit dem Träger 12 ausgebildet sein und beispielsweise in einem Druck-Guß-Verfahren hergestellt sein.

Das Wischerlager 14 lagert eine Wischerwelle 16, die in eingebauter Lage aus der Karosserie des Kraftfahrzeugs herausragt und an der hier nicht gezeichnete Wischerarme mit Wischblättern befestigt sind. Weiterhin trägt der Träger 12 einen Antrieb 18, der als Elektromotor ausgebildet ist und über ein Getriebe 20 eine Abtriebskurbel 22 in eine Hin-oder Herbewegung oder eine umlaufend rotatorische Bewegung versetzt. Die Abtriebskurbel 22 ist über eine Schubstange, die hier der Übersichtlichkeit halber nicht gezeichnet ist, mit einer Antriebskurbel 24 verbunden, die wiederum drehfest mit der Wischerwelle 16 verbunden ist, so dass diese im Betrieb eine Hin- und Herbewegung ausführt und dadurch den Wischerarm mit dem Wischblatt in eine pendelnde Bewegung versetzt.

Zur Befestigung an der Karosserie des Kraftfahrzeugs weist der Träger 12 Halteelemente 26 auf, die als Bohrungen in Befestigungsabschnitten 34 des plattenförmigen Trägers 12 ausgebildet sind. In den Hohlungen 26 sitzen noch gummiartige Dämpfungselemente 28, die die Vibrationen des Trägers 12 gegen die Karosserie des Kraftfahrzeugs dämpfen.

Der Träger 12 besteht im Wesentlichen aus einer rechteckigen Platte 30, von deren Rand aus sich kragenartig die wandförmige Umrandung 33 auf die dem Antrieb 18 hin zugewandte Seite erstreckt. Die Platte 30 ist von im Wesentlichen rechteckiger Gestalt, von der aus sich die lappenartigen Befestigungsabschnitte 34 erstrecken. Die wandförmige Umrandung 33 kann die Befestigungsabschnitte 34 einschließen oder aber auch ausspaaren.

Zwischen dem Befestigungsabschnitt 34 und der Platte 30 des Trägers 12 sind jeweils Sollbruchstellen 36 angeordnet, die so ausgelegt sind, dass sich beim Aufprall eines Fußgängers auf die Karosserie des Kraftfahrzeugs im Bereich der Scheibenwischvorrichtung 10 oder insbesondere auf die Wischerwelle 16 der Scheibenwischvorrichtung 10, die Sollbruchstellen 36 verbiegen oder abbrechen, so dass die Scheibenwischvorrichtung 10 und insbesondere die Wischerwelle 16 zurückweicht, um die Verletzungsgefahr des Fußgängers an der Scheibenwischvorrichtung bzw. an der Karosserie des Kraftfahrzeugs zu vermindern.

Die Sollbruchstellen sind hier als Bohrung 38, als Langloch 40 oder als rechteckiger Durchbruch 42 ausgebildet. Natürlich sind hier auch andere Ausbildungen möglich, entscheidend ist lediglich, dass eine Schwächung des Widerstandsquerschnitts zwischen Befestigungsabschnitt 34 und der Platte 30 des Trägers 12 vorgesehen ist.

Weiterhin weist der Träger 12 einen zylinderförmigen Stutzen als Befestigungselement 44 auf, der sich senkrecht aus der kragenformigen Umrandung 32 des Trägers 12 heraus erstreckt und der Befestigung eines Trägerrohrs dient, welches ein weiteres Wischerlager zu tragen vermag. Der Übersichtlichkeit halber ist das Trägerrohr mit dem weiteren Wischerlager hier nicht gezeichnet.

Der plattenförmige Träger 12 weist darüber hinaus spannungssteuernde Elemente 46 auf, die als Aussparungen oder Materialanhäufungen ausgebildet sind. Diese sind so angeordnet, dass sich die Spannungen im Träger 12 beim Aufprall eines Fußgängers auf die Scheibenwischvorrichtung 10 auf die Sollbruchstellen 36 derart erhöhen, dass die Sollbruchstellen 36 sich verbiegen oder gar völlig abbrechen. Die Anordnung dieser spannungssteuernden Elemente 46 kann in einfacher Weise durch eine Finite-Elemente-Simulation ermittelt werden, und ist von der genauen Form des Trägers 12 und der Anordnung der Antriebseinheit 18 sowie der Befestigungsabschnitte 34 und der Anordnung des Wischerlagers 14 abhängig.

Eine zentrale Bohrung in der Platte 30 des Trägers 12 wirkt hier als spannungssteuerndes Element 46 und gleichzeitig als Sollbruchstelle 36.

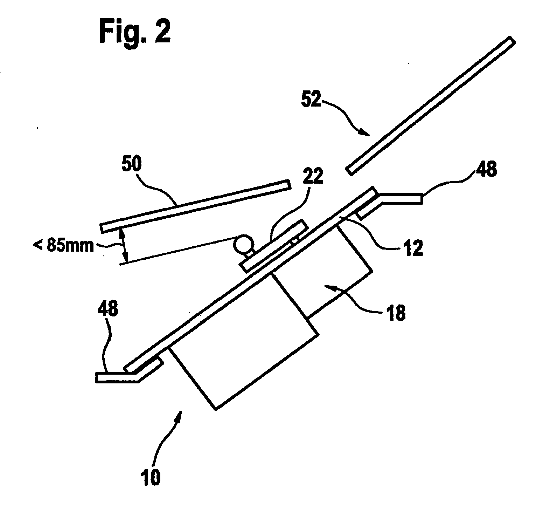

In Figur 2 ist die Anordnung einer erfindungsgemäßen Scheibenwischvorrichtung 10 in einem Kraftfahrzeug in schematischer Darstellung gezeigt. Der Träger 12 ist an Karosserieabschnitten 48 des Kraftfahrzeugs befestigt. Über der Scheibenwischvorrichtung 10 ist die Motorhaube 50 angeordnet, so dass ein Mindestabstand von 85 mm zwischen der Abtriebskurbel 22 der Scheibenwischvorrichtung 10 und der Motorhaube 50 erreicht wird. Oberhalb der Scheibenwischvorrichtung 10 ist die Windschutzscheibe 52 angeordnet, über die im Betrieb die Wischerarme mit den Wschblättern gleiten.

## Patentansprüche

1. Scheibenwischvorrichtung (10), insbesondere für ein Kraftfahrzeug, mit einem plattenförmigen Träger (12), an dem mindestens eine Antriebseinheit (18) und mindestens ein Halteelement (26) angeordnet ist, wobei der plattenförmige Träger (12) mindestens eine Sollbruchstelle (36) aufweist, **dadurch gekennzeichnet, dass** am Träger (12) mindestens ein Wischerlager (14) angeordnet ist und der Träger (12) eine kragenartige Umrandung aufweist.

2. Scheibenwischvorrichtung (10) nach Anspruch 1, **dadurch gekennzeichnet, dass** die Sollbruchstelle (36) im Bereich des Halteelements (26) und/oder im Bereich des Wischerlagers (14) angeordnet ist.

3. Scheibenwischvorrichtung (10) nach einem der vorhergehenden Ansprüche, **dadurch gekennzeichnet, dass** die Sollbruchstelle (36) als Bohrung (26), Langloch (40) oder Durchbruch (42) ausgebildet ist.

4. Scheibenwischvorrichtung (10) nach einem der vorhergehenden Ansprüche, **dadurch gekennzeichnet, dass** die Antriebseinheit (18) innerhalb der Umrandung (33) aufgenommen ist.

5. Scheibenwischvorrichtung (10) nach einem der vorhergehenden Ansprüche, **dadurch gekennzeichnet, dass** am Träger (12) ein Befestigungselement (44) vorgesehen ist, das der Befestigung eines Trägerrohrs dient.

6. Scheibenwischvorrichtung (10) nach einem der vorhergehenden Ansprüche, **dadurch gekennzeichnet, dass** der Träger (12) spannungssteuernde Elemente (46) aufweist.

7. Scheibenwischvorrichtung (10) nach einem der vorhergehenden Ansprüche, **dadurch gekennzeichnet, dass** zumindest eine Sollbruchstelle (36) etwa zentral im plattenförmigen Träger (12) angeordnet ist.

## Claims

1. Windscreen wiper device (10), especially for a motor vehicle, with a plate-like support (12) on which at least one drive unit (18) and at least one retaining element (26) are arranged, wherein the plate-like support (12) has at least one predetermined breaking point (36), **characterized in that** at least one wiper bearing (14) is arranged on the support (12), and the support (12) has a collar-like border.

2. Windscreen wiper device (10) according to Claim 1, **characterized in that** the predetermined breaking point (36) is arranged in the region of the retaining element (26) and/or in the region of the wiper bearing (14).

3. Windscreen wiper device (10) according to one of the preceding claims, **characterized in that** the predetermined breaking point (36) is designed as a bore (26), elongated hole (40) or aperture (42).

4. Windscreen wiper device (10) according to one of the preceding claims, **characterized in that** the drive unit (18) is accommodated within the border (33).

5. Windscreen wiper device (10) according to one of the preceding claims, **characterized in that** a fastening element (44) which serves for the fastening of a support tube is provided on the support (12).

6. Windscreen wiper device (10) according to one of the preceding claims, **characterized in that** the support (12) has stress-controlling elements (46).

7. Windscreen wiper device (10) according to one of the preceding claims, **characterized in that** at least one predetermined breaking point (36) is arranged approximately centrally in the plate-like support (12).

## Revendications

1. Dispositif d'essuie-glace (10) notamment pour un véhicule automobile comprenant un support (12) en forme de plaque muni d'au moins une unité d'entraînement (18) et d'au moins un élément de fixation (26), le support (12) en forme de plaque ayant au moins un point de rupture de consigne (36),
**caractérisé en ce qu'**
au moins un palier d'essuie-glace (14) est prévu sur le support (12) et le support (12) a un entourage en forme de collerette.

2. Dispositif d'essuie-glace (10) selon la revendication 1,
**caractérisé en ce que**
le point de rupture de consigne (36) est prévu dans la région de l'élément de fixation (26) et/ou dans la région du palier d'essuie-glace (14).

3. Dispositif d'essuie-glace (10) selon les revendications précédentes
**caractérisé en ce que**
le point de rupture de consigne (36) est réalisé sous la forme d'un perçagc (26), d'un trou oblong (40) ou d'un passage (42).

4. Dispositif d'essuie-glace (10) selon les revendications précédentes
**caractérisé en ce que**
l'unité d'entraînement (18) est logée dans l'entourage (33).

5. Dispositif d'essuie-glace (10) selon les revendications précédentes
**caractérisé en ce qu'**
un élément de fixation (44) est prévu sur le support (12) et il sert de tube de support.

6. Dispositif d'essuie-glace (10) selon les revendications précédentes
**caractérisé en ce que**
le support (12) comporte des éléments de commande de tension (46).

7. Dispositif d'essuie-glace (10) selon les revendications précédentes
**caractérisé en ce qu'**
au moins un point de rupture de consigne (36) est installé sensiblement en position centrale dans le support (12) en forme de plaque.
